Europäisches Patentamt

European Patent Office

Office européen des brevets

(11) Publication number: **0 181 594**
**B1**

(12) **EUROPEAN PATENT SPECIFICATION**

(45) Date of publication of patent specification: **19.04.89**

(21) Application number: **85114058.2**

(22) Date of filing: **05.11.85**

(51) Int. Cl.⁴: **C 25 B 9/00, C 25 B 13/00, C 25 B 1/46**

(54) Method of operation of an electrolysis cell.

(30) Priority: **05.11.84 US 667949**

(43) Date of publication of application:
**21.05.86 Bulletin 86/21**

(45) Publication of the grant of the patent:
**19.04.89 Bulletin 89/16**

(84) Designated Contracting States:
**BE DE FR GB IT NL**

(56) References cited:
**FR-A-2 263 034**
**US-A-4 013 535**
**US-A-4 017 375**
**US-A-4 139 448**

(73) Proprietor: **THE DOW CHEMICAL COMPANY**
**2030 Dow Center Abbott Road P.O. Box 1967**
**Midland Michigan 48640-1967 (US)**

(72) Inventor: **Beaver, Richard Neal**
**10 Forest Lane**
**Angleton Texas 77515 (US)**

(74) Representative: **Weickmann, Heinrich, Dipl.-Ing.**
**et al**
**Patentanwälte Dipl.-Ing. H.Weickmann Dipl.-**
**Phys.Dr. K.Fincke Dipl.-Ing. F.A.Weickmann**
**Dipl.-Chem. B. Huber Dr.-Ing. H. Liska Dipl.-**
**Phys.Dr. J. Prechtel Postfach 860820**
**D-8000 München 86 (DE)**

Courier Press, Leamington Spa, England.

## Description

This invention relates to a method of tensioning the membrane used in electrolytic cells of the membrane-type.

Electrolytic cells of the "membrane-type" are well known in the art. Such membrane-type cells employ a membrane as opposed to a diaphragm to separate an anode compartment containing anolyte from a cathode compartment containing catholyte. The membrane employed is generally sheet-like and made of a material such as fluoropolymer ion-exchange material which is capable of transporting electrolyte ions while being substantially hydraulically-impermeable. A diaphragm on the other hand, which is usually made of asbestos, permits limited, but substantial, flow through of aqueous electrolyte solution.

Electrolytic cells employing membranes include, for example, monopolar and bipolar type cells including filter press cells. U.S. Patent Nos. 4,108,742 and 4,111,779, for example, describe typical bipolar cells. A bipolar cell generally includes repeating units of an anode compartment with an anode therein and a cathode compartment with a cathode therein and wherein the compartments are separated by a membrane. Such electrolytic cells are typically employed for the electrolysis of aqueous salt solutions, for example, alkali metal chloride brines used in the production of chlorine and alkali metal hydroxides.

When an ion-exchange membrane is employed in an electrolytic cell, it is advantageous to keep the membranes stretched and taut between the electrode compartment to provide a uniform flat membrane surface and minimize wrinkling of the membrane. Wrinkles in the membrane and on the membrane surface can form because the membrane tends to absorb water and thus swell a certain percentage after it is installed in a cell and contacted with electrolyte at cell operating conditions. The amount of swelling depends on the amount of water in the electrolyte. Swelling of the membrane causes the membrane to lose its tension or tautness between the electrode compartment in a cell which then causes wrinkling to occur on the membrane. Wrinkles formed on a membrane surface can trap gas bubbles, such as chlorine and hydrogen, during an electrolytic process, for example, in the production of chlorine and caustic. These trapped bubbles increase the electrical resistance and power consumption of a cell and, thus, reduce the efficiency of the cell.

In addition to the problem of trapping gas bubbles, a loose or expanded membrane may vibrate excessively between the electrode compartments during operation of the cell and eventually may cause damage to the membrane due to mechanical wear. It is also known that wrinkles are sites for the initiation of cracks in the membrane. Cracks permit leakage of electrolyte between the cell compartments which result in contamination of the cell products and reduced cell performance. Cracks can also occur on the barrier layer of a multi-layered membrane whichcan allow back migration of ions, such as $OH^-$ migration into the catholyte causing loss of cell efficiency.

In an attempt to solve the membrane wrinkling problem described above, methods have been used to pretreat or precondition the membrane prior to inserting it between the electrode compartments in a cell. For example, the membrane described in U.S. Patent No. 4,376,030 is presoaked in a solvent and then air dried prior to its installation in a cell to minimize the swelling of the membrane, and thus reduce the slack and wrinkling during actual operation of the cell. It is, however, desired to further reduce the slack and wrinkling of membranes used in the membrane-type electrolytic cells.

This invention provides a method for tensioning a membrane for an electrolytic cell, wherein said cell comprises a cell frame having a plurality of electrolyte compartments, each compartment containing at least one pair of electrodes comprising an anode and a cathode, each of said electrode pairs having a hydraulically impermeable membrane disposed between said anode and said cathode separating each electrolyte compartment into an anolyte portion and a catholyte portion, characterized by providing said electrolyte compartment with a space to receive a portion of the membrane, and maintaining a higher pressure in at least one said portions of the electrolyte compartment which does not contain the membrane receiving space, such that the membrane is pressed against the electrode and into the membrane receiving space to retain the membrane taut. The invention will be described in the following in connection with the figures of the accompanying drawings. In the following figures, the same reference numbers are used in the drawings to describe identical elements.

Figure 1 is a cross-sectional top view showing an electrode-membrane assembly.

Figure 2 is a cross-sectional top view showing a portion of an electrolytic cell with an electrode-membrane assembly.

Figure 3 is a cross-sectional top view showing a portion of an electrolytic cell with an electrode-membrane assembly.

Figure 4 is a perspective view showing an electrode in an electrode frame member.

Figure 5 is a perspective view showing an electrode in two sections in an electrode frame member.

Figure 6 is a perspective view showing an electrode in three sections in an electrolytic frame member with one electrode section pulled out of the electrode frame member.

"Electrode" as used herein means a single member or a plurality of members defining an anode or cathode used in an electrolytic cell. The material of the electrode can be any well-known material used for the purpose of such electrode. If the electrode used is an anode the material may be a valve metal such as titanium. If the electrode is a cathode, the material may be steel, stainless steel, nickel or nickel-coated steel. The anode or cathode can be solid, punched plate, expanded mesh or wire screen. The electrode can be any shape desired. Preferably, the electrode is rectangular in shape. The anode is preferably a rectangularly shaped titanium mesh sheet. The cathode is preferably a rectangularly shaped nickel mesh sheet. The electrode may be coated with a suitable electro-conducting electro-catalytically active material. For example, where the electrode is to be used as an anode, e.g., in the electrolysis of aqeous alkali metal chloride solution, the anode may be coated with one or more platinum group metals, that is, platinum, rhodium, iridium, ruthenium, osmium or palladium and/or an oxide of one or more of these metals. The coating of platinum group metal and/or oxide may be present in admixture with one or more non-noble metal oxides, particularly one or more film-forming metal oxides, e.g., titanium dioxide. Electro-conducting electro-catalytically active materials for use as anode coatings in an electrolytic cell, particularly a cell for the electrolysis of aqueous alkali metal chloride solution, and methods of application of such coatings, are well known in the art. Where the electrode is to be used as a cathode, e.g., in the electrolysis of aqueous alkali metal chloride solution, the cathode may be coated with a material designed to reduce the hydrogen over-potential at the cathode. Suitable coatings are also known in the art.

"Membrane" as used herein means any sheet-like membrane used in an electrolytic cell for separating the cell into two electrode compartments, in particular, an anode compartment containing the anode and a cathode compartment containing a cathode. The membrane is preferably a cation exchange membrane of a fluoropolymer ion exchange material which is capable of transporting electrolysis ions while being hydraulically impermeable. Suitable membranes include membranes of Nafion® material manufactured by E. I. duPont de Nemours and Company or membranes of Flemion® material manufactured by Asahi Glass Company.

"Electrolytic cell" as used herein means any cell which utilises a membrane as a separator. The cell can be a monopolar or a bipolar cell of the filter press-or flat plate-type. It is preferred to use a filter press, bipolar electrode-type electrolytic cell in the present invention. The electrolytic cell herein will be described in reference to those typically used for the electrolysis of aqueous salt solutions, for example, alkali metal chloride salt solutions used in the production of chlorine and alkali metal hydroxide, i.e., chlor-alkali cell, but is not to be limited thereto. It is to be understood that other cells, such as fuel cells or cells employed in hydrolysis of water, are intended to be covered.

The phrase "means defining a space adapted to receive a portion of the membrane surface" or "membrane receiving space" as used herein means a narrow opening such as a slit or a slot or groove across the surface of the electrode, a coplanar gap between two or more electrode member sections, or a coplanar gap between an electrode member section and the electrode frame of the electrolytic cell. The opening, groove or gap is independent and separate from the openings or perforations on the surface of an electrode such as a mesh electrode and the opening groove or gap may be any shape desired. The size of the opening, groove, or gap is generally larger than the mesh openings of a conventional wire mesh electrode. Preferably, the opening may be a narrow slot in the range of from 0.8 mm to 13 mm across the anode surface. The size of the opening, groove or gap, however, should be sufficient to take up membrane "slack", during operation of the cell.

"Slack" as used herein means that portion of the membrane which is loose and not tightly secured within an electrode cell. In addition, slack may include wrinkles which form on the surface of the membrane. Membrane slack may occur before or during use of an electrolytic cell.

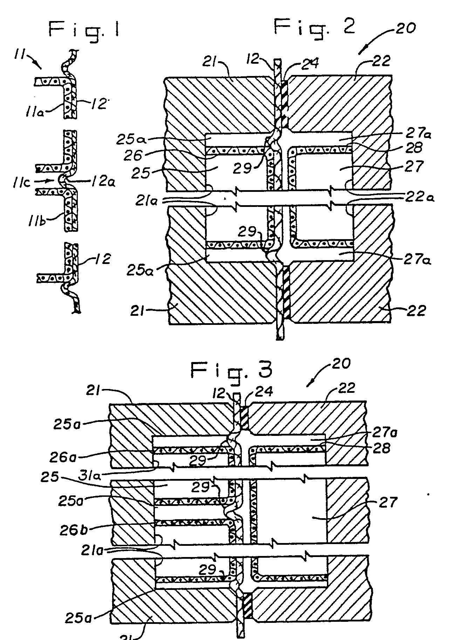

With reference to Figure 1, there is shown an electrode-membrane assembly comprising an electrode, indicated generally by numeral 11, contiguous with a membrane 12. Electrode 11 comprises electrode portions or sections 11a and 11b which are separated by a space or gap indicated generally by numeral 11c therebetween. The membrane slack indicated generally by numeral 12a, is taken up and positioned in gap 11c between electrode sections 11a and 11b. The gap 11c may be in the form of a slot between electrode sections. Alternatively, when a single electrode member is used, the slot may be anywhere on the surface of the electrode. Contacting or pressing the membrane 12 against the electrode and forcing the slack portion 12a of the membrane into the space 11c between the electrode section 11a and 11b may be carried out by maintaining pressure on the side of the membrane 12 not facing the electrode which is slightly greater than that on the other, electrode contacting, side of the membrane. By forcing the slack portion 12a into the space 11, the membrane 12 is tensioned and any wrinkles present in the membrane are removed.

Figure 2 shows a filter-press-type electrolytic cell indicated generally by reference numeral 20 with an anode cell frame portion 21, a cathode cell frame portion 22, and a membrane 12 interposed between the frame portions 21 and 22. The frame portions are sealed together by a suitable means such as a gasket 24.

The membrane 12 separates the anode frame portion 21 and cathode frame portion 22 into an anode compartment 25 containing an anode 26 and a cathode compartment 27 containing a cathode 28 therein. In this embodiment both the anode 26 and the cathode 28 are in the form of a single section or sheet of wire mesh. However, the anode 26 or the cathode 28 may be in the form of a plurality of sections better illustrated in Figure 3. The anode is preferably made of titanium and the cathode is preferably made of nickel. Both electrode compartments 25 and 27, in this instance, are provided with a space 25a and 27a, respectively, defined by the periphery of the electrode and the inside of the electrode frame for receiving the slack portion of a membrane, indicated generally by numeral 29, which is present during operation of the cell. A pressure differential is provided during operation of the cell, to press the membrane against one of the electrodes. For example, as shown in Figure 2, the membrane is pressed against the anode 26 with the slack portions 29 of the membrane pushed into the spaces 25a along the periphery of the anode 26. The membrane 12 is pressed against the anode by maintaining the hydrostatic head in the cathode compartment 27, higher than in the anode compartment 25. Thus, any wrinkles formed on the membrane may be removed by maintaining the pressure differential in the cell.

It is an important feature of the present invention that a space or gap be provided in one of the electrode compartments for receiving the slack portion of a membrane, which may be caused by expansion of the membrane during operation of a cell, in order to prevent wrinkles from forming on the surface of the membrane. Wrinkles in the membrane itself or on the membrane surface may lead to cracks after a period of cell operation which could result in leakage of electrolyte between electrode compartments and the loss of cell efficiency.

The anode 26 or cathode 28 may be attached, such as by welding, directly to the cell frame portions 21 and 22, respectively. Alternatively, the anode 26 or cathode 28 can be spaced from the back wall portion 21a and 22a of the cell frame portions 21 and 22, respectively, with a stand-off means (not shown). This particular spacing is provided so as to provide room for the electrolyte and electrolysis product to circulate in the electrode compartment.

The anode stand-off means and cathode stand-off means, typically, serve as an electrical current conductor means to electrically connect the anode and cathode of a bipolar filter press-type electrode. The connection is usually made through the cell frame wall portion 21a and 22a. Although this invention is particularly applicable to cells having bipolar electrodes, it is to be understood that the present invention is not limited to bipolar electrodes and, therefore, the terms "anode" and "cathode" in this specification and in the appended claims may refer to monopolar electrodes as well as bipolar electrodes that act as an anode or a cathode.

The type of anode or cathode stand-off means useful in the invention may be in the form of connector bars, screws, rods, and bolts. The anode or cathode can be welded or otherwise attached to the cell frame directly or to the stand-off means.

Referring to Figure 3, there is shown a filter press-type electrolytic cell, indicated generally by reference numeral 20, with an anode frame portion 21, cathode frame portion 22, and a membrane 12 interposed between the cell frame portions.

The membrane 12 separates the anode frame portion 21 from the cathode frame portion 22 forming anode compartment 25 containing an anode made up of two anode sections 26a and 26b and cathode compartment 27 containing a cathode 28. The anode sections 26a and 26b are spaced apart from each other and the inside wall of the anode frame portion 21 by a gap 25a. A gasket 24 is interposed between the membrane and the cathode frame portion 22 to provide a seal. The slack portions 29 of the membrane are pushed into the gaps 25a between anode sections 26a and 26b during operation of the cell by maintaining the hydrostatic head in the cathode compartment 27 higher than in the anode compartment 25.

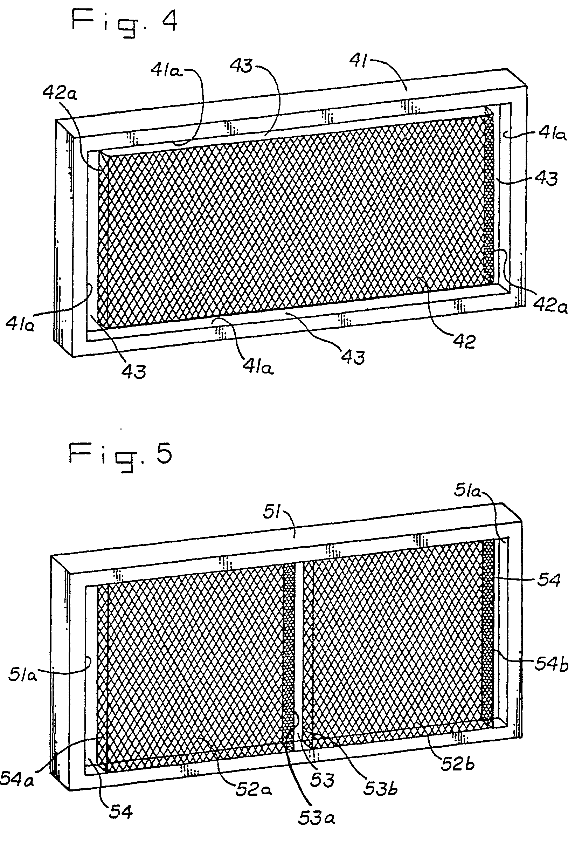

With reference to Figure 4, there is shown an electrode frame portion 41 of an electrolytic cell with a single electrode section 42 positioned therein. A space or gap 43, defined by the inside surface 41a of the frame portion 41 and the perimeter of the electrode section 42 is provided for taking up membrane slack during operation of the cell. The ends 42a of the electrode section are curved inwardly into the frame portion 41. In any of Figures 4, 5 and 6, the electrode may be an anode or a cathode.

Figure 5 shows an electrode frame portion 51 of an electrolytic cell with two electrode sections 52a and 52b. The electrode sections are separated by a narrow gap 53 between inside edges 53a and 53b. The inside edges are curved inwardly into the electrode frame portion 51. A space or gap 54 is preferably provided between the outside edges 54a and 54b, which are curved inwardly into the electrode frame portion 51, of the electrode sections 52a and 52b, respectively, and the inside surface 51a of the frame portion 51.

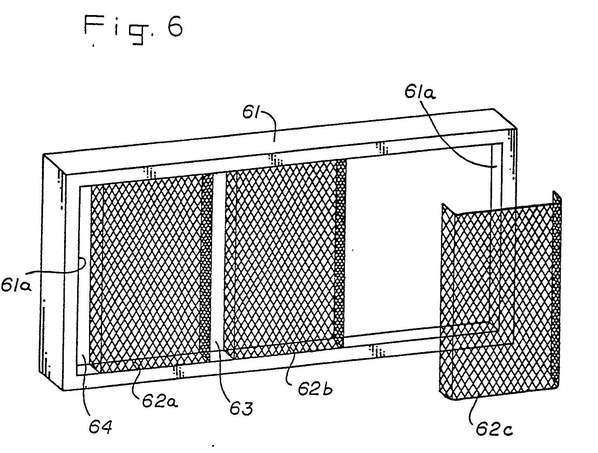

In Figure 6, there is shown an electrode frame portion 61 with an electrode defined by the electrode sections 62a, 62b and 62c. The electrode section 62c is shown removed from the electrode frame portion 61. A gap, indicated generally by numeral 63 between two electrode sections, is also shown. In addition, a space or gap is shown between one end of the anode section 62a and the inside surface 61a of frame portion 61. With the electrode section 62c installed in the frame, a gap will exist between the electrode section 62b and 62c, and between the inside surface 61a of the frame and the electrode section 62c. The two ends of each electrode or electrode section are shown curved inwardly to extend into the electrode frame portion. However, it is also possible to have all edge portions along the perimeter of the electrode or electrode sections curved inwardly to extend into the electrode frame portion.

In carrying out the method of the present invention, an electrolyzing current is passed between an anode and a cathode of a chlor-alkali cell in which the anode and cathode are separated by a permselective ion exchange membrane. Operation of the chlor-alkali cell contemplated by the instant invention are at their normal current density, temperature and catholyte and anolyte concentrations. Preferably, the current density employed ranges from 0.155 to 0.465 amp/cm² at a cell operating temperature of approximately 70°C to about 95°C. The concentration of anolyte is preferably from 16 to 20 weight percent NaCl brine solution and the catholyte may contain from 12 to 40 weight percent sodium hydroxide. The differential pressure between the anode and cathode compartment is sufficient to maintain the membrane in contact with either the anode or the cathode. Preferably, the hydrostatic head of pressure is maintained higher in the cathode compartment than in the anode compartment. Preferably, the hydrostatic head in the cathode compartment is maintained at from 15 to 125 cm of water greater than in the anode compartment. It is within the scope of the invention, however, to maintain the hydrostatic head in the anode compartment at from 15 to 125 cm of water greater than in the cathode compartment to press the membrane against the cathode in the cell.

The following example is illustrative of the present invention.

Example

A series of three 122 by 305 cm bipolar chlor-alkali cells with end plates were assembled. The anode consisted of three titanium mesh sections, two end sections were 81 by 115 cm and one center section was 117 by 115 cm. The active surface area of the anode was 32,250 cm². The anode sections were fixed into the anode compartment to establish a 1.6 cm gap between each of the three sections. The cathode consisted of three nickel mesh sections with the same dimensions as the anode. The cathode sections were fixed into the cathode compartment to establish a 1.6 cm gap between each of the three sections. The separator was a 122 by 305 cm sheet of Nafion® permselective ionic membrane. After assembly of the cell, the cell was operated at 0.8 amp/cm². The voltage averaged 3.02 volts at a cell temperature of 90°C and at a caustic concentration of 12.8 weight percent NaOH. The above-constructed cell with a 3 mm electrode gap was operated for 40 days with an average caustic current efficiency of about 85 percent. The hydrostatic head in the cathode compartment was kept at 38 cm of water higher than in the anode compartment. After 40 days of operation, the cell was disassembled and the membrane was visually inspected for wrinkles. The membrane was pressed against the anode member and into the slots with no visible wrinkles present on the membrane surface.

## Claims

1. A method for tensioning a membrane for an electrolytic cell, wherein said cell comprises a cell frame having a plurality of electrolyte compartments, each compartment containing at least one pair of electrodes comprising an anode and a cathode, each of said electrode pairs having a hydraulically impermeable membrane disposed between said anode and said cathode separating each electrolyte compartment into an anolyte portion and a catholyte portion, characterized by providing said electrolyte compartment with a space to receive a portion of the membrane, and maintaining a higher pressure in at least one said portions of the electrolyte compartment which does not contain the membrane receiving space, such that the membrane is pressed against the electrode and into the membrane receiving space to retain the membrane taut.

2. The method of Claim 1 wherein the anolyte portion contains the membrane receiving space and the pressure in the catholyte portion is higher than the pressure in the anolyte portion.

3. The method of Claim 1 wherein the catholyte portion contains the membrane receiving space and the pressure in the anolyte portion is higher than the pressure in the catholyte portion.

## Patentansprüche

1. Verfahren zum Spannen einer Membran für eine Elektrolysezelle, worin diese Zelle einen Zellrahmen mit einer Vielzahl von Elektrolytkammern umfaßt, jede Kammer mindestens ein Paar Elektroden, umfassend eine Anode und eine Kathode enthält, jedes dieser Elektrodenpaare eine hydraulisch undurchlässige Membran, die zwischen der Anode und der Kathode angeordnet ist, aufweist, die jede Elektrolytkammer in einen Anolytteil und einen Katholytteil trennt, dadurch gekennzeichnet, daß die Elektrolytkammer mit einem Raum versehen ist zur Aufnahme eines Teils der Membran und daß ein höherer Druck in mindestens einer dieser Teile der Elektrolytkammer aufrechterhalten wird, der nicht den die Membran aufnehmenden Raum enthält, so daß die Membran gegen die Elektrode und in den die Membran aufnehmenden Raum gedrückt wird, um die Membran straff zu halten.

2. Verfahren nach Anspruch 1, worin der Anolytteil den die Membran aufnehmenden Raum enthält und der Druck in dem Katholytteil höher ist als der Druck in dem Anolytteil.

3. Verfahren nach Anspruch 1, worin der Katholytteil den die Membran aufnehmenden Raum enthält und der Druck in dem Anolytteil höher ist als der Druck in dem Katholytteil.

## Revendications

1. Procédé pour mettre sous tension une membrane pour une cellule électrolytique, dans lequel ladite cellule comporte une armature de cellule présentant une pluralité de compartiments pour électrolyte, chaque compartiment contenant au moins une paire d'électrodes comprenant une anode et une cathode, chacune desdites paires d'électrodes présentant une membrane hydrauliquement imperméable, disposée entre ladite anode et ladite cathode et séparant chaque compartiment pour électrolyte en une portion pour anolyte et une portion pour catholyte, caractérisé en ce que ledit compartiment pour électrolyte est muni d'un espace pour recevoir une portion de la membrane, et en ce que l'on maintient une pression plus élevée dans au moins l'une desdites portions du compartiment pour électrolyte qui ne contient pas d'espace de réception de la membrane, de façon telle que la membrane soit pressée contre l'électrode et dans l'espace de réception de la membrane pour maintenir la membrane raide.

2. Procédé selon la revendication 1, dans lequel la portion pour anolyte contient l'espace de réception de la membrane et dans lequel la pression dans la portion pour catholyte est plus élevée que la pression dans la portion pour anolyte.

3. Procédé selon la revendication 1, dans lequel la portion pour catholyte contient l'espace de réception de la membrane et dans lequel la pression dans la portion pour anolyte est supérieure à la pression dans la portion pour catholyte.

Fig. 1

Fig. 2

Fig. 3

Fig. 4

42a 41a 43 41

41a

43

41a

43

41a 43 42

42a

Fig. 5

51 51a

54

51a

54b

54a

54 52a 53 53b 52b

53a

Fig. 6